# EUROPÄISCHE PATENTANMELDUNG

(11) **EP 3 863 131 A1**
(43) Veröffentlichungstag der Anmeldung: **11.08.2021**
(21) Anmeldenummer: 20194667.0
(22) Anmeldetag: 04.09.2020
(51) Int. Cl.: H01S 3/063, H01S 3/102, H01S 3/107, H01S 3/06, H01S 3/16

(54) **LICHTQUELLE FÜR FMCW-LIDAR**

(71) Anmelder: FRAUNHOFER-GESELLSCHAFT zur Förderung der angewandten Forschung e.V., 80686 München (DE)
(72) Erfinder: Christoph Werner, 79110 Freiburg (DE); Simon Herr, 79110 Freiburg (DE)
(74) Vertreter: WSL Patentanwälte Partnerschaft mbB

(57) **Zusammenfassung**

Erfindungsgemäß wird ein frequenzabstimmbarer Laser (1) zum Erzeugen von elektromagnetischer Nutzstrahlung (7) mit einer über eine Abstimmfrequenzbandbreite abstimmbare Nutzfrequenz vorgeschlagen, wobei der Laser einen Wellenleiter (6) mit einem Lasermedium (5) und einem linearen optischen Resonator aufweist (2, 3), wobei der Wellenleiter in dem Resonator angeordnet ist, wobei der Laser weiterhin zwei Elektroden (10, 11) aufweist, wobei die Elektroden derart ausgestaltet und angeordnet sind, dass in einem Betrieb des Lasers ein elektrisches Feld an das Lasermedium anlegbar ist, und wobei das Lasermedium derart ausgestaltet ist, dass es einen sich aufgrund des Pockels-Effekts in Abhängigkeit von einer Stärke des angelegten elektrischen Feldes linear ändernden Brechungsindex aufweist.

## Beschreibung

Die vorliegende Erfindung betrifft einen frequenzabstimmbaren Laser zum Erzeugen von elektromagnetischer Nutzstrahlung mit einer über eine Abstimmfrequenzbandbreite abstimmbaren Nutzfrequenz, wobei der Laser einen Wellenleiter mit einem Lasermedium und einen linearen optischen Resonator aufweist und wobei der Wellenleiter in dem Resonator angeordnet ist.

Darüber hinaus betrifft die vorliegende Erfindung ein Verfahren zum Erzeugen von elektromagnetischer Nutzstrahlung mit einer über eine Abstimmfrequenzbandbreite abstimmbaren Nutzfrequenz mit den Schritten a) Erzeugen und Abstrahlen einer elektromagnetischen Pumpstrahlung mit einer Pumpwellenlänge, b) Beleuchten eines in einem Wellenleiter angeordneten Lasermediums mit der Pumpstrahlung, wobei der Wellenleiter in einem linearen optischen Resonator angeordnet ist, und c) Erzeugen und Verstärken der Nutzstrahlung in dem Lasermedium.

Für eine Reihe von Anwendungen in der optischen Messtechnik sind kohärente Quellen für elektromagnetische Nutzstrahlung erforderlich, die eine schnelle Abstimmbarkeit der Nutzfrequenz der Nutzstrahlung über eine möglichst große Abstimmfrequenzbandbreite hinweg ermöglichen. Ein Beispiel hierfür sind Quellen für Verfahren zur optischen Abstands- und Geschwindigkeitsmessung, insbesondere für LIDAR- (Abkürzung für englisch: Light Detection And Ranging) Systeme, die auf frequenzmodulierter Dauerstrichstrahlung (FMCW; Abkürzung für englisch: Frequency Modulated Continuous Wave) beruhen.

Im Stand der Technik werden für solche Messaufgaben strommodulierte DFB-Laser oder ECDL-Laser genutzt. Diese Quellen stellen zwar die erforderlichen Intensitäten bereit, sind jedoch im Hinblick auf ihre Abstimmgeschwindigkeit, auf ihre Abstimmfrequenzbandbreite sowie auf die Linearität der Frequenzabstimmung großen Einschränkungen unterlegen.

Demgegenüber ist es Aufgabe der vorliegenden Erfindung eine frequenzabstimmbare kohärente Lichtquelle zu realisieren, die zumindest eine der zuvor genannten Begrenzungen überwindet. Zur Lösung zumindest einer der zuvor genannten Aufgaben wird ein frequenzabstimmbarer Laser zum Erzeugen von elektromagnetischer Nutzstrahlung mit einer über eine Abstimmfrequenzbandbreite abstimmbare Nutzfrequenz vorgeschlagen, wobei der Laser einen Wellenleiter mit einem Lasermedium und einem linearen optischen Resonator aufweist, wobei der Wellenleiter in dem Resonator angeordnet ist, wobei der Laser weiterhin zwei Elektroden aufweist, wobei die Elektroden derart ausgestaltet und angeordnet sind, dass in einem Betrieb des Lasers ein elektrisches Feld an das Lasermedium anlegbar ist, und wobei das Lasermedium derart ausgestaltet ist, dass es einen sich aufgrund des Pockels-Effekts in Abhängigkeit von einer Stärke des angelegten elektrischen Feldes linear ändernden Brechungsindex aufweist.

Die grundliegende Idee des erfindungsgemäßen Lasers ist es, in einem linearen Resonator das Verstärkungsmedium, diese wird in der vorliegenden Anmeldung als Lasermedium bezeichnet, gleichzeitig auch zur Abstimmung der optischen Resonatorlänge zu verwenden. Zu diesem Zweck wird das Lasermedium so ausgewählt, dass es auch den linearen elektrooptischen Effekt, nämlich den Pockels-Effekt zeigt. Der Brechungsindex des Lasermediums ist dann linear von der Stärke eines angelegten elektrischen Feldes abhängig.

Um ein elektrische Feld an das Lasermedium anlegen zu können sind zwei Elektroden vorgesehen. Mit Hilfe der beiden Elektroden kann in dem Volumen des Wellenleiters und damit in dem Volumen des Lasermediums ein statisches elektrisches Feld erzeugt werden, welches über den Pockels-Effekt zu einer Änderung des Brechungsindex des Lasermediums und damit zu einer Änderung der optischen Weglänge des Resonators führt. Die Änderung der optischen Weglänge wiederum bewirkt eine Verschiebung der Resonanzfrequenz des Laserresonators. Da die Laseroszillation innerhalb der Verstärkungsbandbreite des Lasermediums stets der Resonanzfrequenz des Resonators folgt, kann auf diese Weise die Nutzfrequenz der von dem Laser abgestrahlten kohärenten elektromagnetischen Strahlung abgestimmt werden.

Der Laser erlaubt eine integrierte Ausführung, indem das Material eines Chips alle optischen Funktionen des Lasers bereitstellt.

Der Pockels-Effekt zur Abstimmung der optischen Resonatorlänge des Resonators weist eine Reihe von Vorteilen gegenüber anderen Konzepten zur Frequenzabstimmung auf. Der Pockels-Effekt ermöglicht eine schnelle, hysteresefreie Änderung des Brechungsindex des Lasermediums. Die Abstimmrate, d. h. die erzeugte Änderung des Brechungsindex und damit der optischen Weglänge in Abhängigkeit von der Zeit ist linear von dem angelegten elektrischen Feld abhängig. Dies ermöglicht die Realisierung einer konstanten Abstimmrate. Zudem lässt sich eine große Abstimmfrequenzbandbreite erzielen. Dabei wird unter der Abstimmfrequenzbandbreite im Sinne der vorliegenden Anmeldung der Frequenzbereich verstanden, über den die Nutzfrequenz kontinuierlich abgestimmt werden kann, ohne dass die Intensität der Nutzstrahlung auf weniger als die Hälfte ihres maximalen Werts abfällt (FWHM).

Der gewählte lineare optische Resonator weist gegenüber einem Ringresonator den Vorteil auf, dass keine Änderung bzw. Modulation der Ausgangsleistung aufgrund von gegenläufigen Oszillationen der Nutzstrahlung in dem Resonator auftreten. Longitudinale Modensprünge werden vermieden.

Unter einem linearen Resonator wird im Sinne der vorliegenden Anmeldung jeder Resonator verstanden, bei welchem die elektromagnetische Strahlung im Gegensatz zu einem Ringresonator zwischen zwei Endspiegeln oszilliert, so dass die Strahlung zwischen den Endspiegeln eine stehende Welle ausbildet. Dabei weist zumindest einer der beiden Endspiegel ein verringertes Reflexionsvermögen für die Nutzstrahlung auf, so dass die Nutzstrahlung durch den Endspiegel aus dem Resonator auskoppelbar ist. Im Sinne der vorliegenden Anmeldung werden insbesondere auch gekrümmte, gebogene oder gefaltete Resonatoren als lineare Resonatoren bezeichnet, so lange sie zwei Endspiegel aufweisen.

In einer Ausführungsform der Erfindung ist der Wellenleiter derart ausgestaltet, dass er bei der Nutzfrequenz transversal einmodig ist. In einer Ausführungsform der Erfindung bedeutet dies, dass eine Querschnittsfläche des Wellenleiters derart gewählt ist, dass der Laser bei der Nutzfrequenz transversal einmodig ist.

In einer Ausführungsform der Erfindung ist der Wellenleiter derart ausgestaltet, dass er für die Nutzfrequenz innerhalb der Abstimmfrequenzbandbreite ausschließlich die fundamentale Transversalmode (TEM₀₀) unterstützt.

In einer Ausführungsform der Erfindung weist der optische Resonator eine Resonatorlänge auf, sodass der freie Spektralbereich (FSR; Abkürzung für englisch: Free Spectral Range) des Resonators größer ist als eine Verstärkungsbandbreite des Lasermediums. Auf diese Weise wird sichergestellt, dass innerhalb der Abstimmfrequenzbandbreite keine weiteren longitudinalen Moden des Resonators existieren und der Laser immer longitudinal einmodig läuft. Dabei ist der hier betrachtete freie Spektralbereich des Resonators derjenige freie Spektralbereich, den der Resonator mit allen Elementen innerhalb des Resonators, d. h. insbesondere dem Wellenleiter mit dem Lasermedium, aufweist.

In einer Ausführungsform der Erfindung besteht der Kern des Wellenleiters oder der gesamte Wellenleiter aus dem Lasermedium.

In einer Ausführungsform der Erfindung füllt der Wellenleiter den Resonator über seine gesamte Resonatorlänge aus. Mit anderen Worten ausgedrückt ist der gesamte Zwischenraum zwischen den beiden Endspiegeln des linearen Resonators mit dem Wellenleiter ausgefüllt. In einer Ausführungsform der Erfindung erstreckt sich dann das Lasermedium über die gesamte Resonatorlänge zwischen den beiden Endspiegeln des Resonators.

In einer Ausführungsform der Erfindung ist der Wellenleiter ein Stegwellenleiter, vorzugsweise ein Stegwellenleiter in einem Dünnfilmsubstrat. Eine derartige Ausgestaltung ermöglicht eine vollständige Integration des Wellenleiters und damit des Lasers auf einem Chip.

In einer weiteren Ausführungsform der Erfindung weist der Resonator zwei Spiegel auf, wobei zumindest einer der Spiegel eine Endfacette des Wellenleiters umfasst. Nutzt man die Endfacetten des Wellenleiters als Spiegel bzw. Teil eines Spiegels des Resonators, so kann auf einfache Weise der Wellenleiter, vorzugsweise das Lasermedium, den Resonator vollständig ausfüllen. Es versteht sich, dass in einer Ausführungsform der Erfindung jede der beiden Endfacetten jeweils einen Teil eines Spiegels des Resonators bildet.

In einer weiteren Ausführungsform ist die Endfacette mit einer dielektrischen Beschichtung versehen. Der Spiegel umfasst in diese Ausführungsform die Endfacette als Trägersubstrat sowie die dielektrische Beschichtung. Auf diese Weise können die reflektierenden Eigenschaften des Spiegels oder der Spiegel an den jeweiligen Laser angepasst werden.

In einer weiteren Ausführungsform der Erfindung weist der Resonator zwei Spiegel auf, wobei zumindest einer der Spiegel ein in den Wellenleiter geschriebenes Bragg-Gitter aufweist. In einer solchen Ausführungsform wird statt der Endfacette des Wellenleiters ein Bragg-Gitter in den Wellenleiter geschrieben, so wie es aus dem Stand der Technik bekannt ist. Auch diese Ausführungsform weist den Vorteil auf, dass die reflektierenden Eigenschaften des Spiegels für den jeweiligen Laser angepasst werden können. Es versteht sich, dass es auch in dieser Ausführungsform möglich ist, die beiden (End-)Spiegel des Resonators als Bragg-Gitter auszugestalten.

In einer weiteren Ausführungsform der Erfindung ist die dielektrische Beschichtung oder das Bragg-Gitter über eine Reflexionsbandbreite hinweg für die Nutzstrahlung reflektierend, wobei die Reflexionsbandbreite kleiner ist als die Verstärkungsbandbreite des Lasermediums. Diese Maßnahme unterstützt die Einmodigkeit der von dem Laser erzeugten und abgestrahlten elektromagnetischen Strahlung. Zudem kann mit der optischen Beschichtung die gewünschte Emissionswellenlänge innerhalb des Verstärkungsprofils des Lasermediums ausgewählt werden. In einem Beispiel beträgt die Reflexionsbandbreite 1 nm. Für elektromagnetische Strahlungen mit einer Wellenlänge von 1 µm entspricht dies einer spektralen Breite der abgestrahlten elektromagnetischen Strahlung von etwa 300 GHz.

In einer Ausführungsform der Erfindung ist der freie Spektralbereich des Resonators größer als die Reflexionsbandbreite der dielektrischen Beschichtung oder des Bragg-Gitters. Auch diese Maßnahme unterstützt die Einmodigkeit der von dem Laser erzeugten und abgestrahlten elektromagnetischen Strahlung.

In einer Ausführungsform der Erfindung ist das Lasermedium Seltenerdionen-dotiertes Lithiumniobat oder Seltenerdionen-dotiertes Lithiumtantalat. Beide Materialien sind Lasermedien, welche die elektromagnetische Strahlung verstärken und gleichzeitig auch den Pockels-Effekt zeigen.

In einer Ausführungsform der Erfindung ist die Kristallorientierung des Lasermediums, insbesondere die Kristallorientierung des Seltenerdionen-dotierten Lithiumniobats oder des Seltenerdionen-dotierten Lithiumtantalats X-cut, d. h. die optische Achse des Lasermediums verläuft bei einer Integration in einem Chip in einer Ebene parallel zu den Ober- und Unterseiten des flächig ausgedehnten Chips.

In einer Ausführungsform der Erfindung erstrecken sich die beiden Elektroden über die gesamte Resonatorlänge. Dies bedeutet, dass sich die beiden Elektroden in einer Ausführungsform über die gesamte Länge des Wellenleiters und vorzugsweise damit über die gesamte Länge des Lasermediums erstrecken. In einer Ausführungsform der Erfindung hat jede der beiden Elektroden, vorzugsweise über ihre gesamte Länge, einen Abstand von 100 µm oder weniger von dem Wellenleiter mit dem Lasermedium. Auf diese Weise kann eine hohe Integrationsdichte der Elemente des Lasers auf einem Chip erzielt werden und die elektrische Feldstärke, die für den Pockels-Effekt an das Lasermedium angelegt wird, ist auch bei moderaten Spannungen hoch.

In einer Ausführungsform der Erfindung sind die beiden Elektroden auf die Oberflächen eines Chips, in dem der Wellenleiter strukturiert ist, aufgebracht.

In einer weiteren Ausführungsform der Erfindung umfasst der frequenzabstimmbare Laser eine Spannungsquelle mit einem steuer- und/oder regelbaren Spannungsausgang, wobei die Spannungsausgang der Spannungsquelle derart mit den beiden Elektroden verbunden ist, so dass in einem Betrieb des Lasers eine Spannung an die Elektroden anlegbar ist.

In einer Ausführungsform der Erfindung wird der frequenzabstimmbare Laser der vorliegenden Erfindung in eine der zuvor beschriebenen Ausführungsformen als Lichtquelle für eine optische Abstands- oder Entfernungsmessung verwendet.

In einer Ausführungsform der Erfindung wird der erfindungsgemäße frequenzabstimmbare Laser gemäß einer Ausführungsform, sowie sie zuvor beschrieben wurde, als Lichtquelle in einem FMCW-LIDAR-System verwendet.

Zumindest eine der zuvor genannten Aufgaben wird auch durch ein Verfahren zum Erzeugen von elektromagnetischer Strahlung mit einer über eine abstimmbare Frequenzbandbreite abstimmbaren Nutzfrequenz gelöst, wobei das Verfahren die Schritte umfasst: a) Erzeugen und Abstrahlen einer elektromagnetischen Pumpstrahlung mit einer Pumpwellenlänge, b) Beleuchten eines in einem Wellenleiter angeordneten Lasermediums mit der Pumpstrahlung, wobei der Wellenleiter in einem linearen optischen Resonator angeordnet ist, c) Erzeugen und Verstärken der Nutzstrahlung in dem Lasermedium, d) Auskoppeln der Nutzstrahlung aus dem Resonator und e) Ändern eines Brechungsindex des Lasermediums aufgrund des Pockels-Effekts durch Anlegen eines elektrischen Feldes an das Lasermedium, wobei die Änderung des Brechungsindex linear von einer Feldstärke des elektrischen Feldes abhängt, so dass sich eine Resonanzfrequenz des Resonators und damit die Nutzfrequenz ändert.

Soweit die Aspekte der Erfindung im Hinblick auf den frequenzabstimmbaren Laser und seine Ausführungsformen beschrieben wurden, so gelten diese auch für das entsprechende Verfahren zum Erzeugen von elektromagnetischer Strahlung. Insbesondere lässt sich eine Ausführungsform des erfindungsgemäßen Verfahrens mit dem einer Ausführungsform des erfindungsgemäßen Lasers ausführen. Ferner weist der Laser die für das Verfahren erforderlichen Einrichtungen auf.

Weitere Vorteile, Merkmale und Anwendungsmöglichkeiten der vorliegenden Erfindung werden anhand der folgenden Beschreibung, einer Ausführungsform und der dazugehörigen Figuren deutlich. In den Figuren sind gleiche Elemente mit gleichen Bezugszeichen bezeichnet.
- Figur 1: ist eine schematische isometrische Ansicht von schräg oben einer Ausführungsform des frequenzabstimmbaren Lasers.
- Figur 2: ist eine Draufsicht von oben auf den Laser aus Figur 1.

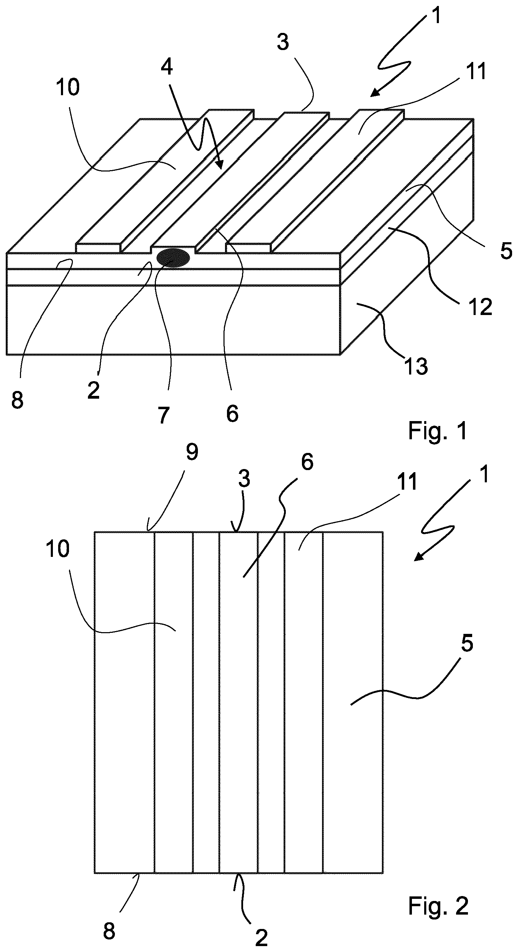

In der in den Figuren 1 und 2 gezeigten Ausführungsform ist der Laser 1 ein monolithisch integrierter Laser aus einem Material, welches alle benötigten Funktionalitäten bereitstellt.

Der Laser 1 umfasst zwei Spiegel 2, 3, welche zusammen den Resonator 4 des Lasers 1 bilden. Der Laser 1 ist in und auf einem Dünnfilm 5 aus Neodym- und Magnesiumoxid-kodotierten Lithiumniobat (Nd:MgO:LiNbO₃) ausgebildet. Dieses Material des Dünnfilms 5 dient sowohl als Lasermedium zum Verstärken der elektromagnetischen Strahlung in dem Laser 1 als auch als Material für den Pockels-Effekt zum Abstimmen der optischen Resonatorlänge des Resonators 4.

Der Dünnfilm 5 ist auf einem Cladding 12 aus SiO₂ und dieses wiederum auf einem Substrat 13 aus Lithiumniobat angeordnet. Der Dünnfilm 5 ist so strukturiert, dass er einen Stegwellenleiter 6 ausbildet, welcher die Führung der elektromagnetischen Nutzstrahlung 7 in dem Resonator 4 ermöglicht. Dabei ist die Querschnittsfläche des Stegwellenleiters 6 so bemessen, dass der Laserresonator 4 für die Nutzstrahlung bei einer Wellenlänge von etwa 1 µm transversal einmodig ist und nur die fundamentale Mode TEMoo unterstützt.

Der Resonator 4 ist ein gerader linearer Resonator und die elektromagnetische Strahlung oszilliert in dem Resonator 4 zwischen zwei Endspiegeln 2 und 3. Die Endspiegel 2 und 3 umfassen die beiden Endfacetten 8, 9 des Dünnfilms 5 und damit des Wellenleiters 6. Auf jeder der beiden Endfacetten 8, 9 ist jeweils eine dielektrische Beschichtung aufgebracht. Die dielektrische Beschichtung bildet zusammen mit der jeweiligen Endfacette 8, 9 als Substrat einen Endspiegel 2, 3 des Resonators 4. Dabei ist die dielektrische Beschichtung derart konzipiert, dass der eine Spiegel 2 ein Auskoppelspiegel mit einer definierten Transmission ist, während der andere Spiegel 3 ein hochreflektierender Spiegel mit so gut wie keiner Auskopplung aus dem Resonator 4 ist. Zudem ist die Reflexionsbandbreite der Spiegel 2, 3 so gewählt, dass diese kleiner ist als die Verstärkungsbandbreite des Neodym-Lithiumniobat-Materials des Dünnfilms 5.

Zur Abstimmung der Nutzfrequenz der elektromagnetischen Nutzstrahlung 7, welche aus dem Resonator 4 und damit aus dem Laser 1 ausgekoppelt wird, wird die Eigenschaft des Neodym-Lithiumniobats verwendet, dass dieses einen ausgeprägten linearen elektrooptischen Effekt, den Pockels-Effekt, zeigt. In Abhängigkeit von einer Feldstärke eines das Material des Wellenleiters 6 durchsetzenden elektrischen Feldes ändert dieses seinen Brechungsindex. Mit der Änderung des Brechungsindex geht eine Änderung der optischen Resonatorlänge des Resonators 4 und damit der Resonanzfrequenz des Resonators einher.

Um ein elektrisches Feld an das Neodym-Lithiumniobat-Material des Wellenleiters 6 anlegen zu können, weist der Laser 1 zwei streifenförmige Elektroden 10, 11 auf, welche ein im Wesentlichen homogenes elektrisches Feld über die ganze Länge des Wellenleiters 6 an das Material des Wellenleiters 6 anlegen. Zu diesem Zweck erstrecken sich die beiden Elektroden 10, 11 parallel zur Längserstreckung des Wellenleiters 6.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmalen oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Laser
- 2,3: Spiegel
- 4: Resonator
- 5: Dünnfilm
- 6: Stegwellenleiter
- 7: Nutzstrahlung
- 8, 9: Endfacette
- 10, 11: Elektrode
- 12: Cladding
- 13: Substrat

## Patentansprüche

1. Frequenzabstimmbarer Laser (1) zum Erzeugen von elektromagnetischer Nutzstrahlung (7) mit einer über eine Abstimmfrequenzbandbreite abstimmbaren Nutzfrequenz, wobei der Laser (1)
einen Wellenleiter (6) mit einem Lasermedium (5) und
einen linearen optischen Resonator (4) aufweist,
wobei der Wellenleiter (6) in dem Resonator (4) angeordnet ist,
**dadurch gekennzeichnet, dass**
der Laser (1) weiterhin zwei Elektroden (10, 11) aufweist, wobei die Elektroden (10, 11) derart ausgestaltet und angeordnet sind, dass in einem Betrieb des Lasers (1) ein elektrisches Feld an das Lasermedium (5) anlegbar ist, und das Lasermedium (5) derart ausgestaltet ist, dass es einen sich aufgrund des Pockels-Effekts in Abhängigkeit von einer Stärke des angelegten elektrischen Feldes linear ändernden Brechungsindex aufweist.

2. Frequenzabstimmbarer Laser (1) nach dem vorhergehenden Anspruch, wobei der Wellenleiter (6) derart ausgestaltet ist, dass er bei der Nutzfrequenz transversal einmodig ist.

3. Frequenzabstimmbarer Laser (1) nach einem der vorhergehenden Ansprüche, wobei der optische Resonator (4) eine Länge aufweist, so dass der freie Spektralbereich des Resonators (4) größer ist als eine der Verstärkungsbandbreite des Lasermediums (5).

4. Frequenzabstimmbarer Laser (1) nach einem der vorhergehenden Ansprüche, wobei ein Kern des Wellenleiters (6) oder der Wellenleiter (6) aus dem Lasermedium besteht.

5. Frequenzabstimmbarer Laser (1) nach einem der vorhergehenden Ansprüche, wobei der Wellenleiter (6) den Resonator (4) über seine gesamte Resonatorlänge ausfüllt.

6. Frequenzabstimmbarer Laser (1) nach einem der vorhergehenden Ansprüche, wobei der Wellenleiter (6) ein Stegwellenleiter, vorzugsweise ein Stegwellenleiter in einem Dünnfilmsubstrat, ist.

7. Frequenzabstimmbarer Laser (1) nach einem der vorhergehenden Ansprüche, wobei der Resonator (4) zwei Spiegel aufweist und wobei zumindest einer der Spiegel eine Endfacette (8, 9) des Wellenleiters (6) umfasst.

8. Frequenzabstimmbarer Laser (1) nach dem vorhergehenden Anspruch, wobei die Endfacette (8, 9) mit einer dielektrischen Beschichtung versehen ist.

9. Frequenzabstimmbarer Laser (1) nach einem der vorhergehenden Ansprüche, wobei der Resonator (4) zwei Spiegel aufweist und wobei zumindest einer der Spiegel ein in den Wellenleiter (6) geschriebenes Bragg-Gitter aufweist.

10. Frequenzabstimmbarer Laser (1) nach Anspruch 8 oder 9, wobei die dielektrische Beschichtung oder das Bragg-Gitter über eine Reflexionsbandbreite hinweg für die Nutzstrahlung (7) reflektierend ist, wobei die Reflexionsbandbreite kleiner ist als die Verstärkungsbandbreite des Lasermediums (5).

11. Frequenzabstimmbarer Laser (1) nach dem vorhergehenden Anspruch, wobei der freie Spektralbereich des Resonators (4) größer ist als die Reflexionsbandbreite der dielektrischen Beschichtung oder des Bragg-Gitters.

12. Frequenzabstimmbarer Laser (1) nach einem der vorhergehenden Ansprüche, wobei das Lasermedium (5) Seltenerdionen-dotiertes Lithiumniobat oder Seltenerdionen-dotiertes Lithiumtantalat ist.

13. Frequenzabstimmbarer Laser (1) nach einem der vorhergehenden Ansprüche, wobei die Elektroden (10, 11) einen Abstand von 100 µm oder weniger von dem Wellenleiter mit dem Lasermedium (5) aufweisen.

14. Verwendung des frequenzabstimmbaren Lasers (1) nach einem der vorhergehenden Ansprüche in einem FMCW-LIDAR-System.

15. Verfahren zum Erzeugen von elektromagnetischer Nutzstrahlung (7) mit einer über eine Abstimmfrequenzbandbreite abstimmbaren Nutzfrequenz mit den Schritten
a) Erzeugen und Abstrahlen einer elektromagnetischen Pumpstrahlung mit einer Pumpwellenlänge,
b) Beleuchten eines in einem Wellenleiter (6) angeordneten Lasermediums (5) mit der Pumpstrahlung, wobei der Wellenleiter (6) in einem linearen optischen Resonator (4) angeordnet ist,
c) Erzeugen und Verstärken der Nutzstrahlung (7) in dem Lasermedium (5) und
d) Auskoppeln der Nutzstrahlung (7) aus dem Resonator (4),
**dadurch gekennzeichnet, dass** das Verfahren weiterhin den Schritt aufweist
e) Ändern eines Brechungsindex des Lasermediums (5) aufgrund des Pockels-Effekts durch Anlegen eines elektrischen Feldes an das Lasermedium, wobei die Änderung des Brechungsindex linear von einer Feldstärke des elektrischen Feldes abhängt, so dass sich eine Resonanzfrequenz des Resonators (4) und damit die Nutzfrequenz ändert.
